# EUROPEAN PATENT APPLICATION

(11) **EP 2 675 181 A2**
(43) Date of publication of application: **18.12.2013**
(21) Application number: 12752211.8
(22) Date of filing: 29.02.2012
(51) Int. Cl.: H04N 21/431, H04N 21/435, H04N 21/6437, H04N 13/00

(54) **METHOD AND DEVICE FOR ACQUIRING 3D FORMAT DESCRIPTION INFORMATION**

(30) Priority: 02.03.2011 CN 201110050253
(71) Applicant: Huawei Technologies Co., Ltd., Shenzhen, Guangdong 518129 (CN)
(72) Inventor: ZHANG, Yuanyuan, Shenzhen Guangdong 518129 (CN); HUI, Yu, Shenzhen Guangdong 518129 (CN); SHI, Teng, Shenzhen Guangdong 518129 (CN); ZHANG, Chuxiong, Shenzhen Guangdong 518129 (CN)
(74) Representative: Körber, Martin Hans
(86) International application number: PCT/CN2012/071767
(87) International publication number: WO 2012/116638

(57) **Abstract**

Embodiments of the present invention provide a method and an apparatus for acquiring 3D format description information. The method includes: receiving an out-of-band message that carries 3D format description information and is sent by a sending end, where the out-of-band message is received before a client participates in a multimedia session initiated by the sending end; and parsing the out-of-band message and acquiring the 3D format description information from the out-of-band message. In the method and the apparatus for acquiring 3D format description information according to the embodiments of the present invention, a client is capable of acquiring 3D format description information before a video is acquired, so that the client may determine, before the video is received, whether the client matches a format used for a 3D video. This improves the speed of determining the match, reduces the overhead of receiving and processing the video, decreases electric power consumption, and alleviates the burden on a receiving device.

## Description

This application claims priority to Chinese Patent Application No. 201110050253.6, filed with the Chinese Patent Office on March 2, 2011 and entitled "METHOD AND APPARATUS FOR ACQUIRING 3D FORMAT DESCRIPTION INFORMATION", which is incorporated herein by reference in its entirety.

### TECHNICAL FIELD

The present invention relates to the field of information technologies, and in particular, to a method and an apparatus for acquiring 3D format description information.

### BACKGROUND

A 3D (Three Dimensional; 3D) video may use different formats for transmission or storage. Common 3D format types include frame packing (Frame Packing; FP), two-dimensional video plus auxiliary video (Two Dimensional video plus Auxiliary video; 2DA), simulcast (Simulcast; SC), and the like.

To correctly process a 3D video, a client needs to acquire certain information. The information enables the client to determine which format is used for the 3D video, so that the client is adjusted to a status that matches a format of the received 3D video and then processes the 3D video. For example, the 3D video is processed to obtain a left view to be projected to the left eye of a person and a right view to be projected to the right eye of the person. The information that the client needs to acquire is collectively called 3D format description information.

In an existing method for transmitting 3D format description information, 3D format description information that describes the frame packing format is encapsulated into a frame packing arrangement supplemental enhancement information message (frame packing arrangement SEI message), and then the frame packing arrangement SEI message is encapsulated into a video bit stream for transmission. The video bit stream is a video in a post-coding form. After receiving the video bit stream, a client acquires the frame packing arrangement supplemental enhancement information message from the video bit stream, and then acquires the 3D format description information that describes the frame packing format from the message.

A multimedia system is generally a heterogeneous system, and probably involves both 2D clients and 3D clients. For 3D clients, some clients probably support the format of the frame packing while the others support the format of the 2D video plus auxiliary video. For 3D clients supporting the format of the frame packing, some clients probably support only frame packing in side-by-side and top-and-bottom pattern rather than frame packing in chessboard pattern. For 3D clients supporting the format of two-dimensional video plus auxiliary video, some clients probably do not support an auxiliary video which is a depth map. Then there could be a case where some clients do not support a 3D format used for a certain 3D video. The frame packing arrangement supplemental enhancement information, however, is carried in a video bit stream and is transmitted in a periodic manner. That is, transmission is performed once at a certain interval. This is likely to cause the following: A client in the multimedia system can acquire the frame packing arrangement supplemental enhancement information only after experiencing a period of time following receipt of the video bit stream; and further obtain 3D format description information that describes the frame packing format, and then determine whether a 3D format used for a received video is supported.

Therefore, in the existing method for transmitting 3D format description information, after a user clicks a Play button, a client probably needs to wait for a certain period of time before it is determined that the client does not support a 3D format used for a 3D video and accordingly cannot correctly process and display the 3D video. Therefore, user experience is affected. In addition, the overhead of receiving and processing a video increases, electric power consumption increases, and in particular the burden on a power-sensitive mobile client increases.

### SUMMARY

Embodiments of the present invention provide a method and an apparatus for acquiring 3D format description information, so as to resolve a defect of the prior art that a client is capable of receiving 3D format description information only after experiencing a period of time following receipt of a video, thereby shortening the time for the client to determine whether a 3D format used for the video is supported.

An embodiment of the present invention provides a method for acquiring 3D format description information, including:
receiving an out-of-band message that carries 3D format description information and is sent by a sending end, where the out-of-band message is received before a client participates in a multimedia session initiated by the sending end; and
parsing the out-of-band message and acquiring the 3D format description information from the out-of-band message.

An embodiment of the present invention further provides another method for acquiring 3D format description information, including:
acquiring a 3D video file, where a metadata portion of the 3D video file carries 3D format description information; and
parsing the metadata portion of the 3D video file and acquiring the 3D format description information from the metadata portion.

An embodiment of the present invention further provides an apparatus for acquiring 3D format description information, including:
a receiving module, configured to receive an out-of-band message that carries 3D format description information and is sent by a sending end, where the receiving module receives the out-of-band message before a client participates in a multimedia session initiated by the sending end; and
a parsing module, configured to parse the out-of-band message received by the receiving module and acquire the 3D format description information from the out-of-band message.

An embodiment of the present invention further provides another apparatus for acquiring 3D format description information, including:
an acquiring module, configured to acquire a 3D video file, where a metadata portion of the 3D video file carries 3D format description information; and
a parsing module, configured to parse the metadata portion of the 3D video file acquired by the acquiring module and acquire the 3D format description information from the metadata portion.

In the methods and apparatuses for acquiring 3D format description information according to the embodiments of the present invention, a client is capable of acquiring 3D format description information before a video is acquired, so that the client may determine, before the video is received, whether a 3D format used for the 3D video is supported; and the video is acquired only after it is determined that the client supports the 3D format used for the 3D video. This shortens the time for the client to determine the 3D format used for the video, reduces the overhead of receiving and processing the video, decreases electric power consumption, and alleviates the burden on a receiving device.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a flowchart of a first embodiment of a method for acquiring 3D format description information according to the present invention;
FIG. 2 is a flowchart of a second embodiment of the method for acquiring 3D format description information according to the present invention;
FIG. 3 is a flowchart of a third embodiment of the method for acquiring 3D format description information according to the present invention;
FIG. 4 is a flowchart of a fourth embodiment of the method for acquiring 3D format description information according to the present invention;
FIG. 5 is a flowchart of a fifth embodiment of the method for acquiring 3D format description information according to the present invention;
FIG. 6 is a flowchart of a sixth embodiment of the method for acquiring 3D format description information according to the present invention;
FIG. 7 is a schematic structural diagram of a first embodiment of an apparatus for acquiring 3D format description information according to the present invention; and
FIG. 8 is a schematic structural diagram of a second embodiment of the apparatus for acquiring 3D format description information according to the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

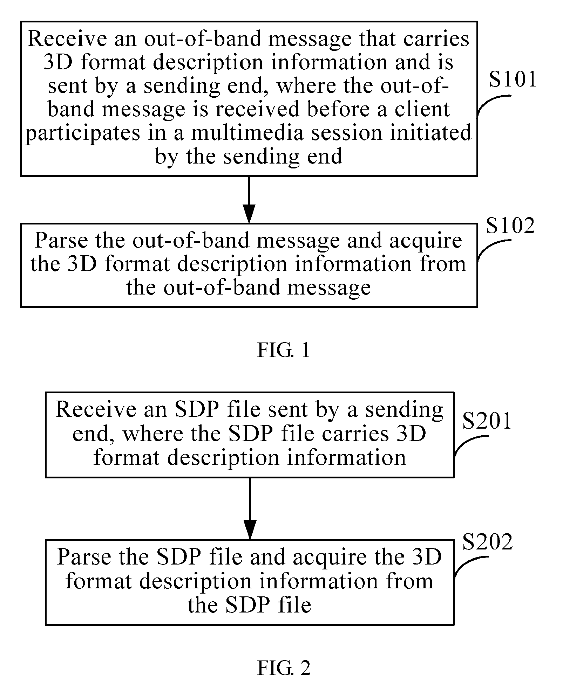

FIG. 1 is a flowchart of a first embodiment of a method for acquiring 3D format description information according to the present invention. As shown in FIG. 1, the method includes the following:
S101. Receive an out-of-band message that carries 3D format description information and is sent by a sending end, where the out-of-band message is received before a client participates in a multimedia session initiated by the sending end.
S102. Parse the out-of-band message and acquire the 3D format description information from the out-of-band message.

The preceding steps are executed by a receiving device of the client.

The out-of-band message that carries 3D format description information is a message acquired by the receiving device outside a multimedia session which is initiated by the sending end. In this embodiment of the present invention, the client receives the out-of-band message before participating in the multimedia session initiated by the sending end. That is, the receiving device is capable of receiving the out-of-band message before receiving a media stream sent by the sending end. In different systems or different application scenarios, the out-of-band message may be various messages transmitted between a sending device and a receiving device.

Specifically, in a multimedia service process, the out-of-band message may be a session description protocol (Session Description Protocol; SDP) file. Since an SDP file usually carries video acquisition information, the sending end needs to first send an SDP file to the client before sending a video to the client. Therefore, at the sending end, the 3D format description information may be carried in an SDP file, so that the client acquires the 3D format description information carried in the SDP file before participating in the multimedia session. Specifically, the 3D format description information may be included in an attribute in the SDP file.

In a television system, because the receiving device of the client needs to first acquire electronic program guide (Electronic Program Guide; EPG) metadata and selects content according to the EPG metadata before starting to receive a media stream, the out-of-band message may be the EPG metadata and at the sending end the EPG metadata may be used to carry the 3D format description information. Specifically, the 3D format description information may be included in an extensible markup language (Extensible Markup Language; XML) element or attribute of the EPG metadata.

In the television system, because a notification message related to program content is delivered slightly ahead of the program content, the out-of-band message may also be a notification message and at the sending end the notification message may be used to carry 3D format description information. Specifically, the 3D format description information may be included in a payload (payload) of the notification message.

This embodiment only lists specific types of out-of-band messages in several systems or service processes, which shall not be construed as a limitation on the present invention.

The 3D format description information may be 3D format type identifier information used to indicate which format is used for a 3D video. The 3D format type identifier information may further include a 3D format type identifier and may also include a component type identifier. In addition, the 3D format description information may further include 3D video processing parameter information.

In the method for acquiring 3D format description information according to this embodiment of the present invention, a client is capable of acquiring 3D format description information from an out-of-band message before a video is acquired, so that the client may determine, before the video is received, whether a 3D format used for a 3D video is supported; and the video is acquired only after it is determined that the client supports the 3D format used for the 3D video. This shortens the time for the client to determine whether the 3D format used for the 3D video is supported, reduces the overhead of receiving and processing the video, decreases electric power consumption, and alleviates the burden on a receiving device.

FIG. 2 is a flowchart of a second embodiment of the method for acquiring 3D format description information according to the present invention. As shown in FIG. 2, this embodiment is applicable to a multimedia service process. In the multimedia service process, an out-of-band message that carries 3D format description information is an SDP file. At a sending end 3D format description information may be carried in an SDP file, and a client receives this SDP file before participating in a media session initiated by the sending end, so that the client may learn, before a video is received, which 3D format is used for the video; and then the client may determine, before the video is received, whether the client supports the 3D format used for the video. The method includes the following:
S201. Receive a session description protocol SDP file sent by the sending end, where the SDP file carries 3D format description information.
S202. Parse the SDP file, and acquire the 3D format description information from the SDP file.

The preceding steps are executed by a receiving device of the client.

When sending a 3D video to the client, the sending end first sends an SDP file to the client, where the SDP file carries 3D format description information. Specifically, the 3D format description information is carried in an attribute in the SDP file.

After receiving the SDP file, the client parses the SDP file and determines whether the SDP file carries the 3D format description information. Specifically, the client may determine whether the SDP file includes an attribute that carries the 3D format description information, and acquire the 3D format description information by parsing the attribute.

In this embodiment of the present invention, the 3D format description information may include 3D format type identifier information. The 3D format type identifier information includes a 3D format type identifier, and the 3D format type identifier indicates a format type used for the 3D video. In addition, the 3D format type identifier information may further include a component type identifier, where the component type identifier indicates a type of a video component of the 3D video.

Specifically, if the 3D format type is frame packing, the component type identifier indicates that the type of the video component is any one of videos arranged in frame packing arrangement manners such as side by side (side by side; SBS), top and bottom (top and bottom; TAB), line interleaved (line interleaved; LIL), column interleaved (column interleaved; CIL), chessboard (Chessboard; CHB), and frame sequential (frame sequential; SEQ). If the 3D format type is 2D video plus auxiliary video, the component type identifier indicates that the type of the video component is any one of a 2D video, a depth map, a parallax map, void data, a 2D video plus a depth map, and a 2D video plus a parallax map; in addition, the component type identifier may further indicate that the 2D video herein carries any one of a left view, a right view, and an intermediate view. If the 3D format type is simulcast, the component type identifier indicates that the type of the video component is either a left view video or a right view video.

In this embodiment, an implementation manner of carrying, by using an attribute in an SDP file, the 3D format type identifier information is given and specifically as follows:
At the sending end, an attribute 3dFormatType in an SDP file may be used to carry the 3D format type identifier information. The attribute is a media-level attribute. A specific format is as follows:
   a=3dFormatType: <3d format type> [<component type>]
where the parameter <3d format type> is a 3D format type identifier, and the optional parameter <component type> is a component type identifier.

A value of <3d format type> includes but is not limited to FP, 2DA, and SC, respectively indicating that the 3D format type is frame packing, 2D video plus auxiliary video, or simulcast; when the value of <3d format type> is FP, a value of <component type> includes but is not limited to SBS, TAB, LIL, CIL, CHB, and SEQ, respectively indicating that the type of the video component of the 3D video is a video with frame packing in side by side, top and bottom, line interleaved, column interleaved, chessboard, or frame sequential form; when the value of <3d format type> is 2DA, the value of <component type> includes but is not limited to 2d, D, P, 2dD, and 2dP, respectively indicating that the type of the video component of the 3D video is a 2D video, a depth map, a parallax map, void data, a 2D video plus a depth map, or a 2D video plus a parallax map; and when the value of <3d format type> is SC, the value of <component type> includes but is not limited to L and R, respectively indicating that the type of the video component of the 3D video is a left view video or a right view video.

For each video component of a 3D video, the attribute 3dFormatType may be used to indicate the 3D format type used for the 3D video that is composed of the video component and the type of the video component.

If the video component of the 3D video does not use the attribute 3dFormatType to indicate the 3D format type and the component type, the 3D format type may be defaulted as 2D video plus auxiliary video and the component type as a 2D video.

The foregoing is only a feasible implementation manner of carrying the 3D format type identifier information by using the attribute 3dFormatType rather than limiting the present invention.

In this embodiment, another implementation manner of carrying, by using an attribute in an SDP file, the 3D format type identifier information is given and specifically as follows:
At the sending end, an attribute fmpt may be used to carry the 3D format type identifier information. The attribute fmpt is a media-level attribute. A specific format is as follows:
   a=fmtp: <payload type><3d format type>[<component type>]
where the parameter <payload type> is a type of an RTP payload that carries a 3D video; the parameter <3d format type> is a 3D format type identifier; and the optional parameter <component type> is a component type identifier.

For each video component of a 3D video, the attribute fmtp may be used to indicate the 3D format type used for the 3D video that is composed of the video component and the type of the video component.

If the video component of the 3D video does not use the attribute fmtp to indicate the 3D format type and the component type, the 3D format type may be defaulted as 2D video plus auxiliary video and the component type as a 2D video.

The foregoing is only a feasible implementation manner of carrying the 3D format type identifier information by using the attribute fmtp rather than limiting the present invention.

In this embodiment of the present invention, the 3D format description information may further include 3D video processing parameter information in addition to the 3D format type identifier information.

Specifically, if the 3D format type is frame packing, the 3D video processing parameter information includes but is not limited to identifier information of a sampling type involved during frame packing and identifier information of a frame placement sequence involved during the frame packing operation; if the 3D format type is 2D video plus auxiliary video and the auxiliary video is a depth map, the 3D video processing parameter information includes but is not limited to a horizontal offset and a vertical offset of a depth sample in a spatial sampling grid of a 2D video as well as value range indication information of depth, that is, parameter information such as a maximum distance behind a screen and a maximum distance before the screen; if the 3D format type is 2D video plus auxiliary video and the auxiliary video is a parallax map, the 3D video processing parameter information includes but is not limited to a horizontal offset and a vertical offset of a parallax sample in a spatial sampling grid of a 2D video, a value representing zero parallax, a zoom ratio used to define a parallax value range, a reference watching distance, and a reference screen width.

Similarly, the 3D video processing parameter information may also be carried by using an attribute in an SDP file.

In this embodiment, an implementation manner of carrying, by using an attribute in an SDP file, the 3D video processing parameter information is given and specifically as follows:
When the 3D format type is frame packing, corresponding 3D video processing parameter information may be carried by using an attribute FramePackingParameters. The attribute FramePackingParameters is a media-level attribute, and a specific format is as follows:
   a=FramePackingParameters: <sampling type>=<value>; <content interpretation type>=<value>
where the parameter <sampling type> indicates a sampling type involved during frame packing; a value of the Sampling type includes but is not limited to none, interleaved, and quincunx, respectively representing no sampling, alternate sampling, and quincunx sampling; and the parameter <content interpretation type> indicates a frame placement sequence involved during frame packing, and its value is LFirst or RFirst, respectively indicating that a video frame corresponding to a left view is placed in front or a video frame corresponding to a right view is placed in front.

When the 3D format type is 2D video plus auxiliary video and the auxiliary video is a depth map, corresponding 3D video processing parameter information may be carried by using an attribute DepthParameters. The attribute DepthParameters is a media-level attribute, and a specific format is as follows:
a=DepthParameters: <position offset h>=<value>; <position offset v>=<value>; <nkfar>=<value>;<nknear>=<value>
where the parameter <position offset h> indicates a horizontal offset of a depth sample in a spatial sampling grid of a 2D video; the parameter <position offset v> indicates a vertical offset of a depth sample in the spatial sampling grid of the 2D video; and the parameters <nkfar> and <nknear> are used to indicate a value range of the depth sample, with <nkfar> indicating a maximum distance behind a screen and <nknear> indicating a maximum distance before the screen.

When the 3D format type is 2D video plus auxiliary video and the auxiliary video is a parallax map, corresponding 3D video processing parameter information may be carried by using an attribute ParallaxParameters. The attribute ParallaxParameters is a media-level attribute, and a specific format is as follows:
a=ParallaxParameters: <position offset h>=<value>; <position offset v>=<value>; <parallax zero>=<value>;<parallax scale>=<value>; <dref>=<value>; <wref>=<value>
where the parameter <position offset h> indicates a horizontal offset of a parallax sample in a spatial sampling grid of a 2D video; the parameter <position offset v> indicates a vertical offset of the parallax sample in the spatial sampling grid of the 2D video; and the parameters <parallax zero>, <parallax scale>, <dref>, and <wref> respectively indicate a value representing zero parallax, a zoom ratio used to define a parallax value range, a reference watching distance, and a reference screen width.

The foregoing is only a feasible implementation manner of carrying the 3D video processing parameter information by using an attribute in an SDP file rather than limiting the present invention.

It should be noted that a 3D video may be composed of multiple video components and different video components may be carried by using different media streams. One SDP file may describe multiple media streams, and each of the media stream carries a different video component. For example, an SDP file describes a media stream 1, a media stream 2, a media stream 3, and a media stream 4. A video component carried by the media stream 1 and a video component carried by the media stream 2 compose one 3D video; and a video component carried by the media stream 3 and a video component carried by the media stream 4 compose another 3D video. Therefore, a client needs to be informed of which media streams compose a 3D video.

In this embodiment, an implementation manner of informing, by using an attribute group and an attribute mid in an SDP file, a client of which media streams compose a 3D video is given and specifically as follows:
Media stream identifiers are defined by using the attribute mid for different media streams that compose a 3D video. The attribute mid is a media-level attribute. It is an identifier of a media stream and unique in one SDP file. A specific format is as follows:
   a=mid: <meidia stream identifer>

Different media streams that compose a 3D video are classified by using the attribute group into one group. The attribute group is a session-level attribute, and used to classify several media streams identified by the attribute mid into one group. A specific format is as follows:
a=group: <semantics> <media stream identifier 1> <meidia stream identifier 2> ... <media stream identifier n>

When <semantics> is S3D, it indicates that various media streams classified into one group compose a 3D video.

One SDP file is specifically shown below. A video component in a media stream identified as 1 and a video component in a media stream identified as 2 compose a 3D video, where the video component in the media stream identified as 1 is a left view video in simulcast format, and the video component in the media stream identified as 2 is a right view video in simulcast format. A video component in a media stream identified as 3 and a video component in a media stream identified as 4 compose a 3D video, where the video component in the media stream identified as 3 is a 2D video of a 3D video in 2D video plus auxiliary video format, the video component in the media stream identified as 4 is an auxiliary video of the 3D video in 2D video plus auxiliary video format, and the auxiliary video is a depth map. One SDP file may specifically be shown as follows:
v=0
o=Alice 292742730 29277831 IN IP4 131.163.72.4
s=The technology of 3D-TV
c=IN IP4 131.164.74.2
t=0 0
a=group:S3D 1 2
m=video 49170 RTP/AVP 99
a=rtpmap:99 H264/90000
a=3dFormatType: SC L
a=mid: 1
m=video 49172 RTP/AVP 101
a=rtpmap:101 H264/90000
a=3dFormatType:SC R
a=mid:2
a=group: S3D 3 4
m=video 49170 RTP/AVP 103
a=rtpmap:103 H264/90000
a=3dFormatType: 2DA 2D
a=mid:3
m=video 49172 RTP/AVP 105
a=rtpmap:105 H264/90000
a=3dFormatType: 2DA D
a=mid:4
m=audio 52890 RTP/AVP 98
a=rtpmap:98 L16/16000/2

As described previously, the 3D format description information carried by the sending end in an SDP file may include 3D format type identifier information, and may further include 3D video processing parameter information. Then the receiving device of the client may acquire the 3D format type identifier information from the acquired SDP file to determine the format used for a 3D video. Accordingly, the client may further acquire the 3D video processing parameter information from the acquired SDP file to perform corresponding processing for a 3D video to be subsequently received.

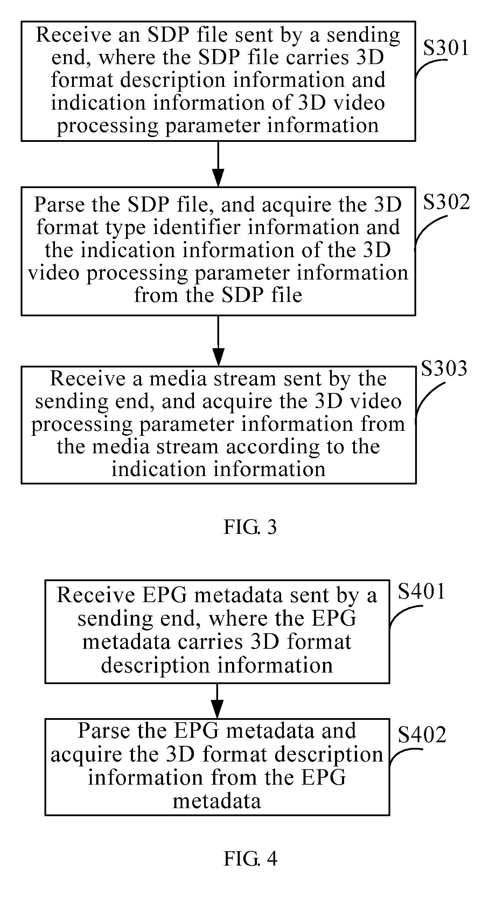

FIG. 3 is a flowchart of a third embodiment of the method for acquiring 3D format description information according to the present invention. As shown in FIG. 3, the method provided in this embodiment is mainly applicable to a multimedia system based on the real-time transport protocol (Real-time Transport Protocol; RTP). A receiving device of a client does not start to acquire a video from a media stream until a period of time later following receipt of the media stream. Therefore, at a sending end, 3D video processing parameter information may be carried in a media stream, and 3D format type identifier information and indication information of the 3D video processing parameter information may be carried in an SDP file, so that the client is capable of acquiring the 3D format type identifier information from the SDP file and acquiring the 3D video processing parameter information from the media stream.

The method includes the following:
S301. Receive a session description protocol SDP file sent by the sending end, where the SDP file carries 3D format description information; the 3D format description information is 3D format type identifier information and indication information of 3D video processing parameter information; and the indication information is used to identify a position of the 3D video processing parameter information in a media stream.
S302. Parse the SDP file, and acquire the 3D format type identifier information and the indication information of the 3D video processing parameter information from the SDP file.
S303. Receive a media stream sent by the sending end, and acquire the 3D video processing parameter information from the media stream according to the indication information.

The preceding steps are executed by the receiving device of the client.

When sending a 3D video to the client, the sending end first sends an SDP file to the client, where the SDP file carries 3D format type identifier information and indication information of 3D video processing parameter information.

After receiving the SDP file, the client parses the SDP file and determines whether the SDP file carries a 3D format, the 3D format type identifier information, and the indication information of the 3D video processing parameter information. If yes, the 3D format type identifier information and the indication information of the 3D video processing parameter information are acquired.

The client acquires a media stream that composes the 3D video, and acquires the 3D video processing parameter information from a corresponding position in the media stream according to the indication information.

In this embodiment, the 3D format type identifier information is carried by using an attribute in the SDP file, and the client acquires the 3D format type identifier information by parsing the attribute.

In a multimedia system based on RTP, a media stream uses an RTP packet as a transmission unit. The RTP packet is divided into two parts: an RTP header (header) and an RTP payload (payload). The RTP header is divided into two parts: a fixed header and an extended header. Therefore, at the sending end, the 3D video processing parameter information may be carried by using the payload of an RTP packet or using the extended header of an RTP packet.

An RTP packet with its payload carrying a 3D video processing parameter at the sending end and an RTP packet used to carry a corresponding 3D video component are transmitted in a same media stream. In this case, the indication information of the 3D video processing parameter information may be carried by using an attribute in the SDP file at the sending end. The indication information indicates a type number of the RTP payload that carries the 3D video processing parameter information.

In this embodiment, an implementation manner of carrying, by using an RTP payload, the 3D video processing parameter information is given and specifically as follows:
If a 3D format type is frame packing, a message that carries corresponding 3D video processing parameter information may be encapsulated into an RTP payload; and the message that carries corresponding 3D video processing parameter information may be specifically sei_rbsp().
If the 3D format type is 2D video plus auxiliary video, a message that carries corresponding 3D video processing parameter information may be encapsulated into an RTP payload; and the message that carries corresponding 3D video processing parameter information may be specifically si_rbsp().

Accordingly, in this embodiment, an implementation manner of carrying, by using an attribute in an SDP file, the indication information of 3D video processing parameter information that is carried by using the payload of an RTP packet is given. The indication information is specifically a type number of an RTP payload. This is specifically as follows:
The type number of an RTP payload that carries 3D video processing parameter information may be indicated by using an attribute rtpmap. The attribute rtpmap is a media-level attribute used to identify a meaning of a payload format represented by the payload type number. A specific format is as follows:
   a=rtpmap: <payload type> <encoding name> / <clock rate> / [/<encoding parameters>]

If a value of the parameter <encoding name> indicates that the RTP payload carries a 3D video processing parameter, for example, when the value is 3dParameters, a corresponding value of the parameter <payload type> is a type number of an RTP payload that carries the 3D video processing parameter information.

The client first acquires an SDP file, and may acquire the type number of an RTP payload that carries the 3D video processing parameter information from the attribute rtpmap in the SDP file. When acquiring a corresponding media stream, the client may acquire, according to the acquired payload type number, an RTP packet from the media stream and acquire the 3D video processing parameter information from the RTP payload of the RTP packet, where the header of the RTP packet includes a PT (Payload Type, payload type) field whose value is identical to the acquired payload type number.

At the sending end, the 3D video processing parameter information may also be carried in the RTP extended header of an RTP packet that carries a corresponding 3D video component. In this case, the indication information of the 3D video processing parameter information is carried by using an attribute in the SDP file at the sending end, where the indication information is used to indicate an identifier of an extended item that carries the 3D video processing parameter information.

In this embodiment, an implementation manner of carrying, by using an RTP extended header, the 3D video processing parameter information is given and specifically as follows:
If the 3D format type is frame packing, corresponding 3D video processing parameter information may be carried by using an extended item. Specifically, an sei_rbsp() message that carries corresponding 3D video processing parameter information may be encapsulated into the extended item, and the extended item is encapsulated into an RTP extended header of an RTP packet that carries a corresponding 3D video component.
If the 3D format type is 2D video plus auxiliary video, corresponding 3D video processing parameter information may be carried by using an extended item. Specifically, an si_rbsp() message that carries corresponding 3D video processing parameter information may be encapsulated into the extended item, and the extended item is encapsulated into an RTP extended header of an RTP packet that carries a corresponding 3D video component.

In this embodiment, an implementation manner of carrying, by using an RTP extended header, the 3D video processing parameter information is further given and specifically as follows:

If the 3D format type is frame packing, parameter information such as identifier information of a sampling type involved during frame packing and identifier information of a frame placement sequence involved during the frame packing operation in corresponding 3D video processing parameter information may be carried by using different extended items; and the extended items are encapsulated into an RTP extended header of an RTP packet that carries a corresponding 3D video component.

If the 3D format type is 2D video plus auxiliary video and the auxiliary video is a depth map, various parameter information, such as a horizontal offset and a vertical offset of a depth sample in a spatial sampling grid of a 2D video as well as a maximum distance behind a screen and a maximum distance before the screen in value range indication information of the depth sample, in corresponding 3D video processing parameter information may be carried by using different extended items; and the extended items are encapsulated into an RTP extended header of an RTP packet that carries a corresponding 3D video component.

If the 3D format type is 2D video plus auxiliary video and the auxiliary video is a parallax map, various parameter information, such as a horizontal offset and a vertical offset of a parallax sample in a spatial sampling grid of a 2D video, a value representing zero parallax, a zoom ratio used to define a parallax value range, a reference watching distance, and a reference screen width, in corresponding 3D video processing parameter information may be carried by using different extended items; and the extended items are encapsulated into an RTP extended header of an RTP packet that carries a corresponding 3D video component.

In this embodiment, it is allowed to encapsulate only extended items that carry the 3D video processing parameter information into an RTP extended header of an RTP packet, where the RTP extended header of the RTP packet carries a key frame of a corresponding 3D video component.

Accordingly, in this embodiment, an implementation manner of carrying, by using an attribute in an SDP file, the indication information of 3D video processing parameter information that is carried by using an RTP extended header is given and specifically as follows:
An identifier of an extended item that carries 3D video processing parameter information is indicated by using an attribute extmap. The attribute extmap may be a media-level attribute or may also be a session-level attribute. It is used to identify a mapping between the identifier of an extended item and the meaning of the extended item. A specific format is as follows:
   a=extmap:<value>["/"<direction>] <URI> <extensionattributes>

If a value of the parameter <URI> indicates that the extended item carries 3D video processing parameter information, for example, when the value is urn:example:params:3dParameters, a value of the parameter <value> is an identifier of the extended item that carries the 3D video processing parameter information.

The client first acquires an SDP file, and may acquire the identifier of an extended item that carries 3D video processing parameter information from the attribute extmap in the SDP file. After acquiring a corresponding media stream, the client first acquires an RTP packet that includes an extended header. Specifically, the client may acquire an RTP packet with an RTP header whose X (extension, extension) field is 1. After acquiring the extended header from the RTP packet, the client parses the extended header, acquires an extended item whose extended item identifier is equal to the acquired identifier of the extended item that carries 3D video processing parameter information, parses the extended item, and acquires the 3D video processing parameter information from the extended item.

In an exemplary implementation manner in this embodiment, the 3D video processing parameter information may also be carried in a video bit stream at the sending end. This may be specifically as follows:
If the 3D format type is frame packing, 3D video processing parameter information is carried by using a frame packing supplemental enhancement information message in a video bit stream.
If the 3D format type is 2D video plus auxiliary video, 3D video processing parameter information is carried by using an si_rbsp() message in a video bit stream.

In this case, at the sending end an attribute in the SDP file may be used to carry indication information of the 3D video processing parameter information, where the indication information indicates a type of a video bit stream message that carries the 3D video processing parameter information.

In this embodiment, an implementation manner of carrying, by using an attribute in an SDP file, the indication information of the 3D video processing parameter information is given and specifically as follows:
If the 3D format type is frame packing, a media-level attribute FramePackingArrangementSEIPresentFlag is used to indicate that the type of a video bit stream message carrying the 3D video processing parameter information is a frame packing supplemental enhancement information message. A specific format is as follows:
   a=FramePackingArrangementSEIPresentFlag: <value>

The <value> being 1 indicates that the video bit stream includes a frame packing supplemental enhancement information message that carries corresponding 3D video processing parameter information; and the value 0 indicates no inclusion.

If the 3D format type is 2D video plus auxiliary video, a media-level attribute SiRbspPresentFlag is used to indicate that the type of a video bit stream message carrying the 3D video processing parameter information is an si_rbsp message. A specific format is as follows:
a=SiRbspPresentFlag: <value>

The <value> being 1 indicates that the video bit stream includes an si_rbsp message that carries corresponding 3D video processing parameter information; and the value 0 indicates no inclusion.

FIG. 4 is a flowchart of a fourth embodiment of the method for acquiring 3D format description information according to the present invention. As shown in FIG. 4, this embodiment is applicable to a television system. Electronic program guide (Electronic Program Guide; EPG) metadata is metadata used to generate an electronic program guide. A user or a receiving device may browse and select a program by EPG metadata, and then participate in a multimedia session corresponding to the program to acquire program content including a video. Therefore, at a sending end, 3D format description information may be carried in the EPG metadata, so that the receiving device of a client is capable of acquiring the 3D format description information before the video is acquired and therefore more quickly determines whether the receiving device matches a format used for a 3D video.

The method includes the following:
S401. Receive electronic program guide EPG metadata sent by the sending end, where the EPG metadata carries 3D format description information.
S402. Parse the EPG metadata and acquire the 3D format description information from the EPG metadata.

The EPG metadata is metadata used to generate an electronic program guide. The user or the receiving device may browse and select a program by the electronic program guide, and then participate in a multimedia session corresponding to the program to acquire program content. The EPG metadata includes metadata that describes channel information, metadata that describes on-demand program information, and metadata that describes live program information. At the sending end, 3D format description information may be carried in the EPG metadata that describes channel information, the metadata that describes on-demand program information, and the metadata that describes live program information, so as to provide 3D format description information respectively for 3D videos in channel content, on-demand program content and live program content.

The EPG metadata may be in an extensible markup language (Extensible Markup Language; XML) form. An XML element or attribute may be added by extending the EPG metadata, so that the 3D format description information is carried by using the newly added XML element or attribute.

In this embodiment, the 3D format description information includes 3D format type identifier information.

In this embodiment, an implementation manner of carrying the 3D format type identifier information in an XML element or attribute that is added by extending EPG metadata is given and specifically as follows:
An XML element or attribute is added to indicate a 3D format type.

If the 3D format type is frame packing, an XML element or an attribute FramePackingType may be further added to indicate a frame packing type used for a frame packing video component of a 3D video.

If the 3D format type is 2D video plus auxiliary video, an XML element or an attribute Aux VideoType may be further added to indicate an auxiliary video type used for an auxiliary video component of a 3D video.

If the 3D format type is simulcast, an XML element or an attribute StereoID may be further added to indicate a view identifier of a 2D video component of a 3D video.

The following table shows specific definitions of the XML elements or attributes.

| | |
|---|---|
| 3DFormatType | Indicate a 3D format type. A value may be as follows: |
| | 1: the 3D format type is frame packing; |
| | 2: the 3D format type is 2D video plus auxiliary video; |
| | 3: the 3D format type is simulcast. |
| FramePackingType | If the 3D format type is frame packing, this element or attribute is further added. |
| | Indicate a frame packing type. A value may be as follows: |
| | 1: side by side |
| | 2: top and bottom |
| | 3: line interleaved |
| | 4: column interleaved |
| | 5: chessboard |
| | 6: frame sequential |
| Aux VideoType | If the 3D format type is 2D video plus auxiliary video, this element or attribute is further added. |
| | Indicate a type of the auxiliary video. A value may be as follows: |
| | 1: depth map |
| | 2: parallax map |
| | 3: void data |
| StereoID | If the 3D format type is simulcast, this element or attribute is further added. |
| | Indicate a view identifier. A value may be as follows: |
| | 1: left view |
| | 2: right view |

In this embodiment, the 3D format description information may further include 3D video processing parameter information.

In this embodiment, an implementation manner of carrying the 3D video processing parameter information in an XML element or attribute that is added by extending EPG metadata is given and specifically as follows:
If the 3D format type is frame packing, corresponding 3D video processing parameter information is carried by adding an XML element FramePackingParameters. The FramePackingParameters may include XML elements or attributes SamplingType and ContentInterpretationType, respectively indicating a sampling type involved during frame packing and a frame placement sequence involved during the frame packing operation.
If the 3D format type is 2D video plus auxiliary video and the auxiliary video is a depth map, corresponding 3D video processing parameter information is carried by adding an XML element DepthParameters. The DepthParameters may include XML elements or attributes position_offset_h, position_offset_v, nkfar, and nknear, respectively indicating a horizontal offset and a vertical offset of a depth sample in a spatial sampling grid of a 2D video as well as a maximum distance behind a screen and a maximum distance before the screen.

If the 3D format type is 2D video plus auxiliary video and the auxiliary video is a parallax map, corresponding 3D video processing parameter information is carried by adding an XML element ParallaxParameters. The ParallaxParameters may include XML elements or attributes position_offset_h, position_offset_v, parallax_zero, parallax_scale, dref, and wref, respectively indicating a horizontal offset and a vertical offset of a parallax sample in a spatial sampling grid of a 2D video, a value representing zero parallax, a zoom ratio used to define a parallax value range, a reference watching distance, and a reference screen width.

The following table shows specific definitions of the XML elements or attributes.

| | |
|---|---|
| FramePackingParameters | If the 3D format type is frame packing, this element may be further added to carry corresponding 3D video processing parameter information. |
| SamplingType | Down sampling type |
| ContentInterpretationType | Frame placement sequence |
| DpethParams | If the 3D format type is 2D video plus auxiliary video and the auxiliary video is a depth map, this element may be further added to carry corresponding 3D video processing parameter information. |
| position_offset_h | Horizontal offset of a depth sample in a spatial sampling grid of the 2D video |
| position_offset_v | Vertical offset of the depth sample in the spatial sampling grid of the 2D video |
| nkfar | Value range of depth, indicating the maximum distance behind the screen |
| nknear | Value range of depth, indicating the maximum distance before the screen |
| ParallaxParameters | If the 3D format type is 2D video plus auxiliary video and the auxiliary video is a parallax map, this element may be further added to carry corresponding 3D video processing parameter information. |
| position_offset_h | Horizontal offset of a parallax sample in a spatial sampling grid of the 2D video |
| position_offset_v | Vertical offset of the parallax sample in the spatial sampling grid of the 2D video |
| parallax_zero | Value representing zero parallax |
| parallax_scale | Zoom ratio used to define a value range of parallax |
| dref | Reference watching distance |
| wref | Reference screen width |

After acquiring the EPG metadata, the receiving device of the client may acquire 3D format description information from the EPG metadata. If the EPG metadata includes an XML element used to carry 3D format description information, the XML element may be parsed to acquire the 3D format description information.

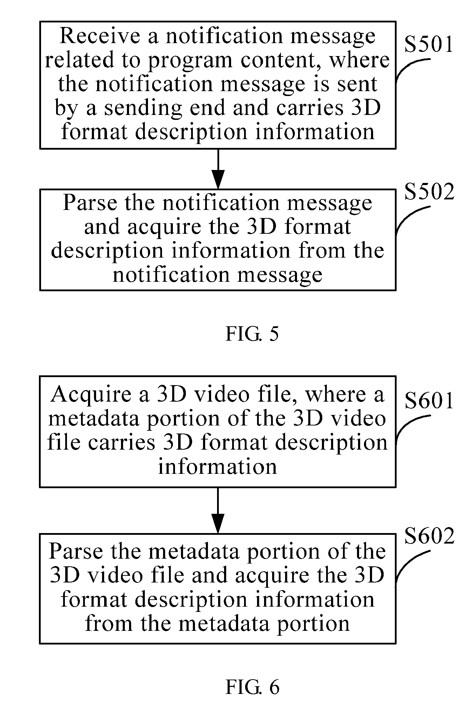

FIG. 5 is a flowchart of a fifth embodiment of the method for acquiring 3D format description information according to the present invention. As shown in FIG. 5, this embodiment is applicable to a television system. Before sending a 3D video to a client, a sending end first sends a notification message related to program content to the client. Therefore, at the sending end, 3D format description information may be carried in the notification message, so that a receiving device of the client is capable of quickly determining whether the receiving device matches a format used for the 3D video. The method includes the following:
S501. Receive a notification message related to program content, where the notification message is sent by a sending end and carries 3D format description information.
S502. Parse the notification message and acquire the 3D format description information from the notification message.

Before sending a 3D video to a client, the sending end first sends a notification message related to program content to the client. A payload (payload) of the notification message carries 3D format description information. The 3D format description information includes 3D format type identifier information, and may further include 3D video processing parameter information. The payload of the notification message may be an XML element, and the 3D format description information may be carried by adding an XML element or attribute. After receiving the notification message, a receiving device of the client may parse the XML element from the payload of the notification message to acquire the 3D format description information.

It should be noted that the notification message involved in this embodiment may be a notification message whose payload carries a readable text; the notification message is sent to a client before the sending end sends the 3D video to the client; and the receiving device receives the notification message and presents the notification message to a user. The readable text may be used to prompt the user to wear 3D glasses or prompt an optimal 3D program watching distance to the user.

FIG. 6 is a flowchart of a sixth embodiment of the method for acquiring 3D format description information according to the present invention. As shown in FIG. 6, a client may acquire a 3D video file from a storage medium, such as an optical disk or a removable hard disk, or receive a 3D video file from a sending end. A metadata portion of such 3D video files may carry 3D format description information. After acquiring a 3D video file, the client acquires 3D format description information from a metadata portion of the 3D video file.

Therefore, the method provided in this embodiment includes the following:
S601. Acquire a 3D video file, where a metadata portion of the 3D video file carries 3D format description information.
S602. Parse the metadata portion of the 3D video file and acquire the 3D format description information from the metadata portion.

After acquiring the 3D video file, the client acquires a metadata item that carries the 3D format description information from the metadata portion of the 3D video file, parses the metadata item, and acquires the 3D format description information.

In this embodiment, an implementation manner of carrying, by using a metadata item, the 3D format description information is given and specifically as follows:
Corresponding 3D format description information of different 3D format types is carried by using different metadata items. A 3D format type is indicated by a type or name of a metadata item. Corresponding 3D format description information of other 3D format types may be carried as content of the metadata item. The type or name of the metadata item and the content of the metadata item may be carried by using different Boxes (boxes). The type or name of the metadata item may be carried by using an Item Info Box (item information box); and the content of the metadata item may be carried by using an Item Data Box (item data box). Then the Boxes are encapsulated into a Metadata Box (metadata box); the Metadata Box is encapsulated into a 3D video track box (track box); the 3D video track box is encapsulated into a Movie Box (movie box); and finally the Movie Box is encapsulated into a file.

Specifically, if the 3D format type is frame packing, corresponding 3D format description information may be encapsulated as a metadata item whose type is fpdt into a corresponding track box (track box) of a frame packing video; then the track box is encapsulated into a Movie Box; and finally the Movie Box is encapsulated into a file.

A feasible implementation manner of encapsulating corresponding 3D format description information of the frame packing format type as a metadata item whose type is fpdt into a corresponding track box (track box) of a frame packing video is as follows:
The type of the metadata item is identified as fpdt in an Item Info Box, and an SEI message that carries corresponding 3D format description information of the frame packing format is encapsulated into an Item Data Box; then the Item Info Box and the Item Data Box are encapsulated into a Metadata Box; and the Metadata Box is encapsulated into a Track Box.

If the 3D format type is 2D video plus auxiliary video, corresponding 3D format description information may be encapsulated as a metadata item whose type is sirp into a corresponding track box of an auxiliary video; then the corresponding track box of the auxiliary video is encapsulated into a Movie Box; and finally the Movie Box is encapsulated into a file.

A feasible implementation manner of encapsulating corresponding 3D format description information of the 2D video plus auxiliary video format as a metadata item whose type is sirp into a corresponding track box of an auxiliary video is as follows:
The type of the metadata item is identified as sirp in an Item Info Box; si_rbsp() is encapsulated into an Item Data Box; the Item Info Box and the Item Data Box are encapsulated into a Metadata Box; and the Metadata Box is encapsulated into a Track Box.

If the 3D format type is simulcast, corresponding 3D format description information may be encapsulated as a metadata item whose type is stvw into a corresponding track box of a left view video and a corresponding track box of a right view video; then the track boxes are encapsulated into a Movie Box; and finally the Movie Box is encapsulated into a file.

A feasible implementation manner of encapsulating corresponding 3D format description information of the simulcast format type as a metadata item whose type is stvw into a corresponding track box of a left view video or into a corresponding track box of a right view video is as follows:
The type of the metadata item is identified as stvw in an Item Info Box; stero_view_Infb() is encapsulated into an Item Data Box; the Item Info Box and the Item Data Box are encapsulated into a Metadata Box; and the Metadata Box is encapsulated into a Track Box.

A definition of the stereo_view_info() structure is as follows:

| stero_view_Info() | | **C** | **Descriptor** |
|---|---|---|---|
| | **Stereo_id** | | |
| | **Reference_track_id** | | |
| } | | | |

The stereo_id is used to indicate whether a carried video is a left view video or a right view video; and the Reference_track_id indicates an identifier of a video track that carries the other view.

At the sending end, the 3D format description information may also be carried by using a box (box) of the metadata portion of a 3D video file. After acquiring a 3D video file, the client acquires a box that carries the 3D format description information from the metadata portion of the 3D video file, parses the box, and acquires the 3D format description information.

In this embodiment, a specific implementation manner of carrying the 3D format description information by using a box of the metadata portion of a 3D video file is further provided and specifically includes the following:
Corresponding 3D format description information of different 3D format types is carried by using different types of boxes, and a 3D format type is indicated by a type of a Box.

A box whose type is fpdt is used to carry corresponding 3D format description information of the frame packing format type.

A box whose type is spif is used to carry corresponding 3D format description information of the 2d video plus auxiliary video format type.

A box whose type is stif is used to carry corresponding 3D format description information of the simulcast format type.

Definitions of the boxes are shown as follows:

```
          class FramePackingDataBox extends Box('fpdt') {
                unsigned int(8) frame_packing_arrangement_type;
                unsigned int(8) sampling_type;
                unsigned int(8) content_interpretation_type;
          }
          class SupplementalInfoBox extends Box('spif) {
                unsigned int(8) aux_video_type;
                unsigned int(8) position_offset_h;
                unsigned int(8) position_offset_v;
                if(aux_video_type=0) {
                   unsigned int(8) nkar;
                   unsigned int(8) nknear;
                }
                 else if(aux_video_type=1) {
                      unsigned int(16) parallax_zero;
                      unsigned int(16) parallax_scale;
                      unsigned int(16) dref;
                      unsigned int(16) wref;
                }
          }
          class StereoViewInfoBox extends Box('stif') {
                unsigned int(8) stereo_id;
                unsigned int(8) reference_track_id;
           }
```

The Box is encapsulated into a Sample Description Box (sample description box); the sample description box is encapsulated into a corresponding track box; the track box is encapsulated into a Movie Box; and finally the Movie Box is encapsulated into a file.

In the method for acquiring 3D format description information according to this embodiment of the present invention, a client is capable of acquiring 3D format description information from metadata in a 3D video file before a video is acquired, so that the client may determine, before the video is acquired, whether a 3D format used for a 3D video is supported; and the video is acquired only after it is determined that the client supports the 3D format used for the 3D video. This shortens the time for the client to determine whether the 3D format used for the 3D video is supported, reduces the overhead of receiving and processing the video, decreases electric power consumption, and alleviates the burden on a receiving device.

Persons of ordinary skill in the art may understand that all or a part of the processes of the methods in the embodiments may be implemented by a computer program instructing relevant hardware. The program may be stored in a computer readable storage medium. When the program is run, the processes of the methods in the embodiments are performed. The storage medium may be a magnetic disk, an optical disk, a read-only memory (Read-Only Memory, ROM), or a random access memory (Random Access Memory, RAM).

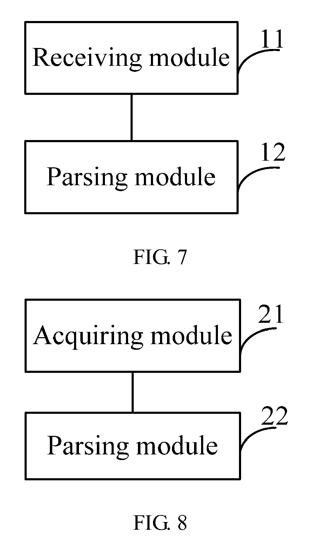

FIG. 7 is a schematic structural diagram of a first embodiment of an apparatus for acquiring 3D format description information according to the present invention. As shown in FIG. 7, the apparatus includes a receiving module 11 and a parsing module 12.

The receiving module 11 is configured to receive an out-of-band message that carries 3D format description information, where the out-of-band message is acquired before the apparatus participates in a multimedia session.

The parsing module 12 is configured to parse the out-of-band message received by the receiving module 11 and acquire the 3D format description information from the out-of-band message.

The 3D format description information that is carried in the out-of-band message received by the receiving module 11 includes 3D format type identifier information; or the 3D format description information includes 3D format type identifier information and 3D video processing parameter information.

The 3D format type identifier information may include a 3D format type identifier; or the 3D format type identifier information may further include a 3D format type identifier and a component type identifier.

In an exemplary embodiment, the out-of-band message received by the receiving module 11 is an SDP file.

The SDP file received by the receiving module 11 carries 3D format type identifier information and indication information of 3D video processing parameter information, where the indication information is used to indicate a position of the 3D video processing parameter information in a media stream.

Further, the receiving module 11 may further be configured to receive a media stream sent by a sending end, and acquire the 3D video processing parameter information from the media stream according to the indication information.

The indication information that is carried in the SDP file received by the receiving module 11 is an RTP payload type number; and
accordingly, the receiving module 11 is further configured to acquire the 3D video processing parameter information from a corresponding RTP payload of the media stream according to the RTP payload type number.

Alternatively, the indication information that is carried in the SDP file received by the receiving module 11 may further be an identifier of an extended item of an RTP header; and
accordingly, the receiving module 11 is further configured to acquire the 3D video processing parameter information from a corresponding RTP header of the media stream according to the identifier of the extended item of the RTP header.

In another exemplary embodiment, the out-of-band message received by the receiving module 11 may further be EPG metadata.

In still another exemplary embodiment, the out-of-band message received by the receiving module 11 may further be a notification message in a television system.

The apparatus for acquiring 3D format description information according to this embodiment corresponds to the first embodiment to the fifth embodiment of the method for acquiring 3D format description information according to the present invention, and is a functional device for implementing the method. For a specific implementation manner of the apparatus, reference may be made to the first embodiment to the fifth embodiment of the method and details are not repeated herein.

In the apparatus for acquiring 3D format description information according to this embodiment of the present invention, a client is capable of acquiring 3D format description information from an out-of-band message before a video is acquired, so that the client may determine, before the video is received, whether a 3D format used for a 3D video is supported; and the video is acquired only after it is determined that the client supports the 3D format used for the 3D video. This shortens the time for the client to determine whether the 3D format used for the 3D video is supported, reduces the overhead of receiving and processing the video, decreases electric power consumption, and alleviates the burden on a receiving device.

FIG. 8 is a schematic structural diagram of a second embodiment of the apparatus for acquiring 3D format description information according to the present invention. As shown in FIG. 8, the apparatus includes an acquiring module 21 and a parsing module 22.

The acquiring module 21 is configured to acquire a 3D video file, where a metadata portion of the 3D video file carries 3D format description information.

The parsing module 22 is configured to parse the metadata portion of the 3D video file acquired by the acquiring module 21 and acquire the 3D format description information from the metadata portion.

The 3D format description information that is carried in the metadata portion of the 3D video file acquired by the acquiring module 21 includes 3D format type identifier information; or the 3D format description information includes 3D format type identifier information and 3D video processing parameter information.

Further, the 3D format type identifier information includes a 3D format type identifier; or the 3D format type identifier information includes a 3D format type identifier and a component type identifier.

The apparatus for acquiring 3D format description information according to this embodiment corresponds to the sixth embodiment of the method for acquiring 3D format description information according to the present invention, and is a functional device for implementing the method. For a specific implementation manner of the apparatus, reference may be made to the foregoing sixth method embodiment and details are not repeated herein.

In the apparatus for acquiring 3D format description information according to this embodiment of the present invention, a client is capable of acquiring 3D format description information from metadata in a 3D video file before a video is acquired, so that the client may determine, before the video is received, whether a 3D format used for a 3D video is supported; and the video is acquired only after it is determined that the client supports the 3D format used for the 3D video. This shortens the time for the client to determine whether the 3D format used for the 3D video is supported, reduces the overhead of receiving and processing the video, decreases electric power consumption, and alleviates the burden on a receiving device.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A method for acquiring 3D format description information, comprising:
receiving an out-of-band message that carries 3D format description information and is sent by a sending end, wherein the out-of-band message is received before a client participates in a multimedia session initiated by the sending end; and
parsing the out-of-band message and acquiring the 3D format description information from the out-of-band message.

2. The method according to claim 1, wherein the 3D format description information comprises 3D format type identifier information; or the 3D format description information comprises 3D format type identifier information and 3D video processing parameter information.

3. The method according to claim 2, wherein the 3D format type identifier information comprises a 3D format type identifier; or the 3D format type identifier information comprises a 3D format type identifier and a component type identifier.

4. The method according to any one of claims 1 to 3, wherein the out-of-band message is an SDP file.

5. The method according to claim 4, wherein the SDP file carries 3D format type identifier information and indication information of 3D video processing parameter information, and the indication information is used to indicate a position of the 3D video processing parameter information in a media stream.

6. The method according to claim 5, further comprising:
receiving a media stream sent by the sending end, and acquiring the 3D video processing parameter information from the media stream according to the indication information.

7. The method according to claim 6, wherein the indication information is a real-time transport protocol, RTP, payload type number, and the acquiring the 3D video processing parameter information from the media stream according to the indication information is specifically:
acquiring the 3D video processing parameter information from a corresponding RTP payload of the media stream according to the RTP payload type number.

8. The method according to claim 6, wherein the indication information is an identifier of an extended item of an RTP header, and the acquiring the 3D video processing parameter information from the media stream according to the indication information is specifically:
acquiring the 3D video processing parameter information from a corresponding RTP header of the media stream according to the identifier of the extended item of the RTP header.

9. The method according to any one of claims 1 to 3, wherein the out-of-band message is electronic program guide EPG metadata.

10. The method according to any one of claims 1 to 3, wherein the out-of-band message is a notification message in a television system.

11. A method for acquiring 3D format description information, comprising:
acquiring a 3D video file, wherein a metadata portion of the 3D video file carries 3D format description information; and
parsing the metadata portion of the 3D video file and acquiring the 3D format description information from the metadata portion.

12. The method according to claim 11, wherein the 3D format description information comprises 3D format type identifier information; or the 3D format description information comprises 3D format type identifier information and 3D video processing parameter information.

13. The method according to claim 12, wherein the 3D format type identifier information comprises a 3D format type identifier; or the 3D format type identifier information comprises a 3D format type identifier and a component type identifier.

14. An apparatus for acquiring 3D format description information, comprising:
a receiving module, configured to receive an out-of-band message that carries 3D format description information and is sent by a sending end, wherein the receiving module receives the out-of-band message before a client participates in a multimedia session initiated by the sending end; and
a parsing module, configured to parse the out-of-band message received by the receiving module and acquire the 3D format description information from the out-of-band message.

15. The apparatus according to claim 14, wherein the 3D format description information that is carried in the out-of-band message received by the receiving module comprises 3D format type identifier information; or the 3D format description information comprises 3D format type identifier information and 3D video processing parameter information.

16. The apparatus according to claim 15, wherein the 3D format type identifier information comprises a 3D format type identifier; or the 3D format type identifier information comprises a 3D format type identifier and a component type identifier.

17. The apparatus according to any one of claims 14 to 16, wherein the out-of-band message received by the receiving module is an SDP file.

18. The apparatus according to claim 17, wherein the SDP file received by the receiving module carries 3D format type identifier information and indication information of 3D video processing parameter information, and the indication information is used to indicate a position of the 3D video processing parameter information in a media stream.

19. The apparatus according to claim 18, wherein the receiving module is further configured to receive a media stream sent by the sending end, and acquire the 3D video processing parameter information from the media stream according to the indication information.

20. The apparatus according to claim 19, wherein the indication information that is carried in the SDP file received by the receiving module is a real-time transport protocol RTP payload type number; and
the receiving module is further configured to acquire the 3D video processing parameter information from a corresponding RTP payload of the media stream according to the RTP payload type number.

21. The apparatus according to claim 19, wherein the indication information that is carried in the SDP file received by the receiving module is an identifier of an extended item of an RTP header; and
the receiving module is further configured to acquire the 3D video processing parameter information from a corresponding RTP header of the media stream according to the identifier of the extended item of the RTP header.

22. The apparatus according to any one of claims 14 to 16, wherein the out-of-band message received by the receiving module is electronic program guide EPG metadata.

23. The apparatus according to any one of claims 14 to 16, wherein the out-of-band message received by the receiving module is a notification message in a television system.

24. An apparatus for acquiring 3D format description information, comprising:
an acquiring module, configured to acquire a 3D video file, wherein a metadata portion of the 3D video file carries 3D format description information; and
a parsing module, configured to parse the metadata portion of the 3D video file acquired by the acquiring module and acquire the 3D format description information from the metadata portion.

25. The apparatus for acquiring 3D format description information according to claim 24, wherein the 3D format description information that is carried in the metadata portion of the 3D video file acquired by the acquiring module comprises 3D format type identifier information; or the 3D format description information comprises 3D format type identifier information and 3D video processing parameter information.

26. The apparatus for acquiring 3D format description information according to claim 25, wherein the 3D format type identifier information comprises a 3D format type identifier; or the 3D format type identifier information comprises a 3D format type identifier and a component type identifier.
